Europäisches Patentamt

European Patent Office

Office européen des brevets

(11) Publication number: **0 337 521**
**A1**

## EUROPEAN PATENT APPLICATION

(21) Application number: 89200566.1

(22) Date of filing: 06.03.89

(51) Int. Cl.⁴: **C08G 67/02**

(30) Priority: 10.03.88 NL 8800600

(43) Date of publication of application:
18.10.89 Bulletin 89/42

(84) Designated Contracting States:
AT BE CH DE ES FR GB GR IT LI LU NL SE

(71) Applicant: SHELL INTERNATIONALE
RESEARCH MAATSCHAPPIJ B.V.
Carel van Bylandtlaan 30
NL-2596 HR Den Haag(NL)

(72) Inventor: van Broekhoven, Johannes
Adrianus Maria
Badhuisweg 3
NL-1031 CM Amsterdam(NL)

(74) Representative: Aalbers, Onno et al
P.O. Box 302
NL-2501 CH The Hague(NL)

(54) Polymers of carbon monoxide with ethene.

(57) Polymers of carbon monoxide with ethene and optionally one or more $C_{3-20}$ alpha-olefins in which the CO and olefin-derived monomer units alternate in linear chains, having a limiting viscosity number of more than 15, are obtained by polymerization under specified conditions of temperature, pressure, partial pressure ratios, and temperature-pressure relationships.

EP 0 337 521 A1

## POLYMERS OF CARBON MONOXIDE WITH ETHENE

The invention relates to novel polymers of carbon monoxide with ethene and optionally one or more $C_{3-20}$ alpha-olefins, and to a process for their preparation.

High molecular weight linear polymers of carbon monoxide with ethene, in which the monomer units -(CO)-and -($C_2H_4$)- occur in alternating order, can be prepared typically by contacting the monomers at a temperature of 20-130 °C, an overall pressure of 20-250 bar and a carbon monoxide/ethene partial pressure ratio of 0.3-3 with a solution of a catalyst composition in a diluent in which the polymers are insoluble or virtually insoluble, the catalyst compositions being based upon:

    a) a palladium compound,

    b) an anion of an acid with a pKa of less than 6, and

    c) a bisphosphine of the general formula $(R_1)_2P-R-P(R_1)_2$, wherein $R_1$ represents an optionally polar-substituted aryl group and R is a bivalent organic bridging group containing at least two carbon atoms in the bridge.

Depending on the reaction conditions and catalyst compositions chosen, polymers with a wide variety of average molecular weights can thus be prepared. It is also possible to replace the ethene in part by another olefinically unsaturated compound, yielding terpolymers. According as the polymers prepared in this way have higher average molecular weights, their intrinsic viscosities too will as a rule be higher. In order to determine the intrinsic viscosity of the present polymers, four solutions are first of all prepared by dissolving the polymer in m-cresol, at four different concentrations. Then the viscosity at 60 °C of each of these solutions relative to that of m-cresol at 60 °C is determined in a viscometer. When $T_o$ represents the efflux time of m-cresol and $T_p$ the efflux time of the polymer solution, the relative viscosity ($\eta_{rel}$) is determined by $\eta_{rel} = T_o/T_p$. The inherent viscosity ($\eta_{rel}$) can be calculated from $\eta_{rel}$, according to the formula: $\eta_{inh} = \ln \eta_{rel} / c$, wherein c represents the polymer concentration as grams per 100 ml of solution. Plotting of the $\eta_{inh}$ found for each of the four polymer solutions against the corresponding concentration (c) and subsequent extrapolation to c = 0 leads to the intrinsic viscosity [$\eta$] as dl/g. Instead of referring to "intrinsic viscosity", the designation recommended by the International Union of Pure and Applied Chemistry, "Limiting Viscosity Number" (LVN), shall be used hereinafter.

Thus far, mainly polymers having an average molecular weight lying in the range of from about 15,000 to 150,000 were prepared in the above-mentioned way. Such average molecular weights correspond with an LVN (60) of about 1-5. Polymers having an average molecular weight within the above-mentioned range can generally be put to the most frequently occurring uses. For some special uses, however, there is a need for polymers with an average molecular weight of more than $10^6$. Such extremely high average molecular weights correspond with an LVN (60) of more than about 15.

The Applicant has carried out an investigation into the preparation of such polymers. In the course of this investigation it was found that linear polymers of carbon monoxide with olefin(s), in which the monomer units occur in alternating order and which polymers have an LVN (60) of more than 15, can be prepared in the above-described way if care is taken that all of the following demands as to applied temperature, overall pressure and carbon monoxide/olefin partial pressure ratio and catalyst composition are met at the same time.

As regards temperature and overall pressure, these should be chosen below 90 °C and above 50 bar, respectively, and in addition, they should be chosen such that the relation $P_{Tot} > 3(t)-50$ is met, in which relation $P_{Tot}$ is the number of bars representing the overall pressure and t the number of centigrades. The carbon monoxide/olefin partial pressure ratio should be chosen to lie within the range of from 0.2 to 1.0. As regards the catalyst composition used, special requirements should be made of the components b) and c) present therein, in the sense that only anions of strong acids with a pKa of less than 2 are suitable as component b) and that for component c), a bisphosphine of the general formula $(R_2)_2P-R_3-P(R_2)_2$ should be used in which $R_2$ is an aryl group containing at least one alkoxy substituent which is located in ortho position in respect to the phosphorus atom and $R_3$ is a bivalent organic bridging group containing three atoms in the bridge at least two of which are carbon atoms. The polymers thus prepared are novel.

The present patent application therefore relates to linear polymers of carbon monoxide with ethene and optionally one or more $C_{3-20}$ alpha-olefins, in which the monomer units -(CO)- alternate with the monomer units derived from the employed olefins, characterized in that the polymers have an LVN (60) of more than 15. The monomer units are preferably derived from CO, ethene and optionally one $C_{3-10}$ alpha-olefin, in particular from CO and ethene or from CO, ethene and propene. The present patent application further relates to a process for the preparation of these polymers by contacting the monomers at such a temperature below 90 °C and at such an overall pressure above 50 bar that the relation $P_{Tot} > 3(t)-50$, in which $P_{Tot}$ is the number of bars representing the overall pressure and $t$ the number of centigrades, is met, and at a carbon monoxide/olefin partial pressure ratio in the range of from 0.2 to 1.0, with a solution of a catalyst composition in a diluent in which the polymers are insoluble or virtually insoluble, the catalyst composition being based upon

    a) a palladium compound,

    b) an anion of an acid with a pKa of less than 2, and

    c) a bisphosphine of the general formula $(R_2)_2P-R_3-P(R_2)_2$, wherein $R_2$ is an aryl group containing at least one alkoxy substituent which is located in ortho position in respect to the phosphorus atom and $R_3$ is a bivalent organic bridging group containing three atoms in the bridge at least two of which are carbon atoms.

The preparation of the polymers of the invention should be carried out at a temperature below 90 °C and an overall pressure above 50 bar. Preferably, the preparation is carried out at a temperature of from 20 to 65 °C and an overall pressure of from 70 to 150 bar. Further, the preparation of the polymers of the invention should be carried out at a carbon monoxide/olefin partial pressure ratio of from 0.2 to 1.0. Preferably, it is carried out at a carbon monoxide/olefin partial pressure ratio of from 0.4 to 0.8.

The preparation of the polymers should be executed in a diluent in which the polymers are insoluble or virtually insoluble. Very suitable diluents are lower alcohols and in particular methanol. Per mol of ethene to be polymerized, such a quantity of catalyst composition should preferably be employed as to contain $10^{-7}$ to $10^{-3}$ and in particular $10^{-6}$ to $10^{-4}$ mol palladium. The polymerization may be carried out either batchwise or continuously.

The palladium compound employed in the catalyst composition as the component a) is preferably a palladium salt of a carboxylic acid and in particular palladium acetate. Examples of suitable acids whose anions can be present in the catalyst compositions as component b) are trifluoroacetic acid, para-toluenesulphonic acid and perchloric acid. Preference is given to trifluoroacetic acid. By preference, component b) is present in the catalyst composition in a quantity of from 0.5 to 50 and in particular of from 1 to 25 mol per mol palladium. Component b) may be taken up in the catalyst composition either in the form of an acid or in the form of a salt. Eligible salts include non-noble transition metal salts. When a salt of a non-noble transition metal is used as component b), preference is given to a copper salt. Optionally, components a) and b) may be used combined in a single compound. An example of such a compound is palladium para-tosylate.

In the bisphosphines which can suitably be used in the catalyst compositions as components c), $R_2$ is preferably a phenyl group containing one or more methoxy substituents at least one of which is located ortho is respect to the phosphorus atom. Examples of suitable bridging groups $R_3$ are the $-CH_2-CH_2-CH_2-$group, the $-CH_2-C(CH_3)_2-CH_2-$ group and the $-CH_2-Si(CH_3)_2-CH_2-$group. Bisphosphines that can be very suitably used as components c) in the catalyst compositions are 1,3-bis[bis(2-methoxyphenyl)phosphino]propane, 1,3-bis[bis(2,4-dimethoxyphenyl)phosphino]propane, 1,3-bis[bis(2,6-dimethoxyphenyl)phosphino]propane, and 1,3-bis[bis(2,4,6-trimethoxyphenyl)phosphino]propane.

In the preparation of the polymers of the invention, preference is given to the use of catalyst compositions containing 1,3-bis[bis(2-methoxyphenyl)phosphino]propane as component c). By preference, the bisphosphines are employed in the catalyst compositions in a quantity of from 0.5 to 2 and in particular of from 0.75 to 1.5 mol per mol palladium.

In order to enhance the activity of the catalyst compositions, a 1,4-quinone may be incorporated as a component d). 1,4-benzoquinones and 1,4-naphthoquinones have proven very suitable for the purpose. Preferably, the amount of 1,4-quinone used is 5-5000 and in particular 10-1000 mol per mol palladium.

The invention will now be illustrated with the aid of the following examples.

## Example 1

A carbon monoxide/ethene copolymer was prepared as follows. A mechanically stirred autoclave with a volume of 4 l was charged with 1.5 l of methanol. After the contents of the autoclave were brought to 70 °C, such quantities of ethene and carbon monoxide were blown in that the ethene partial pressure was 44 bar and the carbon monoxide partial pressure was 36 bar. Subsequently, a catalyst solution was introduced into the autoclave which comprised

9 ml methanol,

3 ml toluene,

0.02 mmol palladium acetate,

0.4 mmol trifluoro acetic acid, and

0.024 mmol 1,3-bis[bis(2-methoxyphenyl)phosphino]propane.

The pressure inside the autoclave was kept up by blowing in a 1:1 carbon monoxide/ethene mixture. After 10 hours, polymerization was terminated by cooling to room temperature and releasing the pressure. The copolymer was filtered off, washed with methanol and dried at 70 ° C.

The yield was 90 g of copolymer. The polymerization rate was 4.5 kg copolymer/g palladium.hour. The copolymer has an LVN (60) of 8.6 dl g.

Example 2

A carbon monoxide/ethene copolymer was prepared substantially in the same way as the copolymer of Example 1, except for the following differences
a) the reaction temperature was 50 ° C instead of 70 ° C,
b) the ethene partial pressure was 43 bar instead of 44 bar,
c) the carbon monoxide partial pressure was 77 bar instead of 36 bar, and
d) the reaction time was 25 hours instead of 10 hours.

The yield was 27 g of copolymer. The polymerization rate was 0.5 kg copolymer/g palladium.hour. The copolymer has an LVN (60) of 13 dl g.

Example 3

A carbon monoxide/ethene copolymer was prepared substantially in the same way as the copolymer of Example 1, the differences being
a) the reaction temperature was 40 ° C instead of 70 ° C,
b) the ethene partial pressure was 37 bar instead of 44 bar,
c) the carbon monoxide partial pressure was 83 bar instead of 36 bar, and
d) the reaction time was 23 hours instead of 10 hours.

The yield was 7 g of copolymer. The polymerization rate was 0.15 kg copolymer/g palladium.hour. The copolymer has an LVN (60) of 11 dl g.

Example 4

A carbon monoxide/ethene copolymer was prepared sub- stantially in the same way as the copolymer of Example 1, the differences being
a) the ethene partial pressure was 22 bar instead of 44 bar, and

b) the carbon monoxide partial pressure was 18 bar instead of 36 bar.

The yield was 60 g of copolymer. The polymerization rate was 3 kg copolymer/g palladium.hour. The copolymer has an LVN (60) of 5.3 dl/g.

Example 5

A carbon monoxide/ethene copolymer was prepared substantially in the same way as the copolymer of Example 1, the differences being
a) the reaction temperature was 100 ° C instead of 70 ° C, and
b) the reaction time was 5 hours instead of 10 hours.

The yield was 250 g of copolymer. The polymerization rate was 25 kg copolymer/g palladium.hour. The copolymer has an LVN (60) of 1.5 dl/g.

Example 6

A carbon monoxide/ethene copolymer was prepared sub- stantially in the same way as the copolymer of Example 1, the differences being
a) the reaction temperature was 65 ° C instead of 70 ° C,
b) the ethene partial pressure was 75 bar instead of 44 bar,
c) the carbon monoxide partial pressure was 70 bar instead of 36 bar, and
d) the catalyst solution employed comprised 9 ml methanol,
3 ml toluene,
0.02 mmol palladium acetate,
0.04 mmol para-toluenesulphonic acid, and
0.024 mmol 1,3-bis(diphenylphosphino)propane.

The yield was 90 g of copolymer. The polymerization rate was 4.5 kg copolymer/g palladium.hour. The copolymer has an LVN (60) of 6.3 dl/g.

Example 7

A carbon monoxide/ethene copolymer was prepared substantially in the same way as the copolymer of Example 1, the differences being
a) the reaction temperature was 35 ° C instead of 70 ° C,
b) the ethene partial pressure was 47 bar instead of 44 bar,

c) the carbon monoxide partial pressure was 28 bar instead of 36 bar, and

d) the reaction time was 24 hours instead of 10 hours.

The yield was 10 g of copolymer. The polymerization rate was 0.2 kg copolymer/g palladium.hour. The copolymer has an LVN (60) of 21 dl/g.

## Example 8

A carbon monoxide/ethene copolymer was prepared substantially in the same way as the copolymer of Example 1, the differences being

a) the reaction temperature was 50 °C instead of 70 °C,

b) the ethene partial pressure was 68 bar instead of 44 bar,

c) the carbon monoxide partial pressure was 52 bar instead of 36 bar, and

d) the reaction time was 17 hours instead of 10 hours.

The yield was 62 g of copolymer. The polymerization rate was 1.8 kg copolymer/g palladium.hour. The copolymer has an LVN (60) of 18 dl/g.

## Example 9

A carbon monoxide/ethene/propene terpolymer was prepared as follows. A mechanically stirred autoclave having a volume of 4 l was charged with 1.5 l of methanol. After bringing the contents of the autoclave to 30 °C, such quantities of pressurized ethene, propene and carbon monoxide were introduced, that the ethene partial pressure was 38 bar, the propene partial pressure was 12 bar and the carbon monoxide partial pressure was 30 bar. Subsequently a catalyst solution was brought into the autoclave, comprising
18 ml acetone,
0.03 mmol palladium acetate,
0.6 mmol trifluoroacetic acid, and
0.032 mmol 1,3-bis[bis(2-methoxyphenyl)-phosphino]propane.

The internal pressure was maintained by pressing in a 1:1 carbon monoxide/ethene mixture. After 62 hours the polymerization was terminated by cooling to room temperature and releasing the pressure. The terpolymer was filtered off, washed with methanol and dried at 70 °C.

The yield was 22 g of terpolymer. The polymerization rate was 0.12 kg terpolymer/g palladium.hour. The terpolymer has an LVN (60) of 17 dl/g.

Of Examples 1-9, Examples 7 to 9 are examples according to the invention. In these examples, two carbon monoxide/ethene copolymers and one carbon monoxide/ethene/propene terpolymer, having LVN's (60) of 21, 18 and 17 dl/g, were prepared by using a catalyst composition containing an ortho-methoxy-substituted tetraaryl bisphosphine as component c), and by carrying out the polymerization at temperatures of 35, 50 and 30 °C, overall pressures of 75, 120 and 80 bar and carbon monoxide/olefin partial pressure ratios of 0.60, 0.76 and 0.60, respectively. In all three examples, the relation $P_{Tot} > 3(t)-50$ was met.

Examples 1-6 fall outside the scope of the invention and have been included in the patent application for comparison. The carbon monoxide/ethene copolymers prepared by these examples had an LVN (60) of at most 13 dl/g. In Example 1, the required relation $P_{Tot} > 3(t)-50$ was not met. The carbon monoxide/ethene partial pressure ratios applied in Examples 2 and 3 were 1.8 and 2.2, respectively. In Examples 4 and 5, the relation $P_{Tot} > 3(t)-50$ was not met; moreover, Example 4 was carried out at too low an overall pressure, and Example 5 at too high a temperature. The catalyst composition applied in Example 6 contained a tetraaryl bisphosphine as component c) which held no polar groups in ortho positions.

With the aid of $^{13}$C-NMR analysis it was established that the carbon monoxide/ethene copolymers prepared by Examples 1-8 were composed of linear chains within which -(CO)- units and -($C_2H_4$)- units occurred in alternating order, and that the terpolymer prepared in Example 9 comprised linear chains composed of -(CO)-($C_2H_4$)- units and -(CO)-($C_3H_6$)- units, which units were randomly distributed within a chain. It was further established by $^{13}$C-NMR analysis that in the terpolymer of Example 9, there were 47 -(CO)-($C_3H_6$)- units per 1000 -(CO)-($C_2H_4$)- units.

## Claims

1. Polymers of carbon monoxide with ethene, and optionally one or more $C_{3-20}$ alpha-olefins, in which the monomer units -(CO)- alternate with the monomer units derived from the employed olefins in linear chains, characterized in that the polymers have an LVN (60) of more than 15.

2. Polymers as claimed in claim 1, characterized in that the monomer units are derived from CO, ethene and optionally one $C_{3-10}$ alpha-olefin.

3. Polymers as claimed in claim 2, characterized in that the monomer units are derived from CO, ethene and propene or from CO and ethene.

4. Process for the preparation of polymers as claimed in claim 1, characterized in that a mixture of carbon monoxide, ethene and optionally one or more $C_{3-20}$ alpha-olefins, is contacted at such a temperature below 90 °C and at such an overall pressure above 50 bar that the relation $P_{Tot} > 3(t)-50$, in which $P_{Tot}$ is the number of bars representing the overall pressure and t the number of centigrades, is met, and at a carbon monoxide/olefin partial pressure ratio in the range of from 0.2 to 1.0, with a solution of a catalyst composition in a diluent in which the polymers are insoluble or virtually insoluble, the catalyst composition being based upon

    a) a palladium compound,

    b) an anion of an acid with a pKa of less than 2, and

    c) a bisphosphine of the general formula $(R_2)_2P-R_3-P(R_2)_2$, wherein $R_2$ is an aryl group containing at least one alkoxy substituent which is located in ortho position in respect to the phosphorus atom and $R_3$ is a bivalent organic bridging group containing three atoms in the bridge at least two of which are carbon atoms.

5. Process as claimed in claim 4, characterized in that it is carried out at a temperature of from 20 to 65 °C.

6. Process as claimed in claim 4 or 5, characterized in that it is carried out at an overall pressure of from 70 to 150 bar.

7. Process as claimed in one or more of claims 4-6, characterized in that it is carried out at a carbon monoxide/olefin partial pressure ratio in the range of from 0.4 to 0.8.

8. Process as claimed in one or more of claims 4-7, characterized in that the catalyst composition comprises a bisphosphine as component c) in which $R_2$ is a phenyl group containing one or more methoxy substituents at least one of which is located in an ortho position relative to the phosphorus atom.

9. Process as claimed in claim 8, characterized in that the catalyst composition comprises 1,3-bis-[bis(2-methoxyphenyl)phosphino]propane as component c).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 222 454 (SHELL INTERNATIONALE RESEARCH MAATSCHAPPIJ B. V.) * claims 1-14; column 6, example 1; column 4, line 44 - column 5, line 24; column 1, lines 44-50 * | 1-9 | C 08 G 67/02 |
| P,X | EP-A-0 285 218 (SHELL INTERNATIONALE RESEARCH MAATSCHAPPIJ B. V.) * claims 1-4,9; column 5, lines 25-31; columns 8,9; example 5; column 4, lines 4-9 * | 1-9 | |
| P,A | EP-A-0 263 564 (SHELL INTERNATIONALE RESEARCH MAATSCHAPPIJ B. V.) * claims 1-3,5-11; column 5, lines 1-14; column 4, lines 1-7 * | 1-9 | |

TECHNICAL FIELDS SEARCHED (Int. Cl.4)

C 08 G

The present search report has been drawn up for all claims

| Place of search | Date of completion of the search | Examiner |
|---|---|---|
| BERLIN | 02-06-1989 | VOIGTLAENDER R O J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)